# EUROPÄISCHE PATENTSCHRIFT

(11) **EP 0 576 925 B1**
(45) Veröffentlichungstag und Bekanntmachung des Hinweises auf die Patenterteilung: **20.08.1997**
(21) Anmeldenummer: 93109668.9
(22) Anmeldetag: 17.06.1993
(51) Int. Cl.: B29C 45/50, B29C 45/07

(54) **Spritzaggregat für Spritzgiessmaschinen**
Injection unit for injection moulding machines
Unité d'injection pour machines à mouler par injection

(30) Priorität: 23.06.1992 DE 4220445; 11.12.1992 DE 4241819
(43) Veröffentlichungstag der Anmeldung: 05.01.1994
(73) Patentinhaber: Battenfeld Kunststoffmaschinen Ges.m.b.H., A-2542 Kottingbrunn (AT)
(72) Erfinder: Heindl, Friedrich, A-2500 Baden (AT); Bleier, Harald, A-2700 Wr. Neustadt (AT); Müssler, Richard, A-7035 Steinbrunn (AT)
(74) Vertreter: Müller, Gerd, Dipl.-Ing.

(56) Entgegenhaltungen:
- EP-A- 0 319 238
- EP-A- 0 427 866
- DE-A- 3 836 507
- DE-A- 4 131 961
- FR-A- 2 234 121
- PATENT ABSTRACTS OF JAPAN vol. 11, no. 94 (M-574)(2541) 25. März 1987 & JP-A-61 244 520 (TOSHIBA MACH. CO.)
- PATENT ABSTRACTS OF JAPAN vol. 12, no. 160 (M-697)(3007) 14. Mai 1988 & JP-A-62 278 017 (TOYO KIKAI KINZOKU)
- PATENT ABSTRACTS OF JAPAN vol. 12, no. 356 (M-745)(3203) 26. September 1988 & JP-A-63 112 135 (TOYO MACH. & METAL CO.)

## Beschreibung

Die Erfindung betrifft ein Spritzaggregat für Spritzgießmaschinen mit einem mehrere Baugruppen umfassenden modularen Aufbau,
- bei dem eine erste Baugruppe aus der von einem Schneckenzylinder und einer Schnecke gebildeten Plastifiziereinheit besteht,
- bei dem eine zweite Baugruppe von dem Dosierantrieb für die Schnecke der Plastifiziereinheit gebildet ist,
- bei dem eine dritte Baugruppe zwei parallelachsig zueinander arbeitende Antriebe umfaßt, über die die Düsenbewegung zwischen der Plastifiziereinheit und dem Spritzwerkzeug betätigbar ist,
- und bei dem eine vierte Baugruppe ebenfalls zwei parallelachsig zueinander arbeitende Antriebe aufweist, über die die Einspritzbewegung der Schnecke im Schneckenzylinder der Plastifiziereinheit als Axialverschiebung hervorbringbar ist,
- wobei sich die Plastifiziereinheit mittig zwischen den beiden parallelachsigen Antrieben der dritten und vierten Baugruppe befindet.

Spritzaggregate für Spritzgießmaschinen dieser Bauart sind bereits bekannte (vgl. EP-B1-0 266 655 sowie AT-Broschüre "CD plus Battenfeld Austria", Seite 16).

Diese bekannten Spritzaggregate für Spritzgießmaschinen haben sich auch im praktischen Einsatz bestens bewährt, weil durch den modularen Aufbau die Möglichkeit geboten wird, eine Spritzgießmaschine in ihrer Ausstattung genau auf das jeweilige Fertigungsprogramm und den Werkzeugbestand abzustimmen.

Alle drei Antriebs-Baugruppen der bekannten Spritzaggregate sind dabei für Hydraulikbetrieb ausgelegt, womit die Notwendigkeit besteht, entweder jede einzelne Spritzgießmaschine mit einer hydraulischen Druckerzeugungsanlage auszustatten oder aber sie zumindest mit einer zentralen hydraulischen Druckmittellieferquelle zu verbinden.

Auch durch die FR-A-2 234 121 gehört ein Spritzaggregat für Spritzgießmaschinen mit einem mehrere Baugruppen umfassenden modularen Aufbau zum Stand der Technik, bei dem eine erste Baugruppe aus der von einem Schneckenzylinder und einer Schnecke gebildeten Plastifiziereinheit besteht, bei dem eine zweite Baugruppe von dem Dosierantrieb für die Schnecke der Plastifiziereinheit gebildet ist und einen elektrischen Servomotor umfaßt,
bei dem die dritte Baugruppe zwei parallelachsig zueinander arbeitende Antriebe umfaßt, über die die Düsenbewegung zwischen der Plastifiziereinheit und dem Spritzwerkzeug betätigbar ist, und bei dem die vierte Baugruppe ebenfalls zwei parallelachsig zueinander arbeitende Antriebe aufweist, über die die Einspritzbewegung der Schnecke im Schneckenzylinder der Plastifiziereinheit hervorbringbar ist, wobei sich die Plastifiziereinheit mittig zwischen den beiden parallelachsigen Antrieben der dritten und vierten Baugruppe befindet. Hierbei arbeitet aber das Spritzaggregat mit reinem Hydraulikantrieb, d.h. auch die beiden Antriebe für die vierte Baugruppe sind als Hydraulikzylinder ausgelegt.

Wesentlicher Nachteil eines solchen Spritzaggregates ist, daß sich die Einspritzbewegung der Schnecke im Schneckenzylinder der Plastifiziereinheit nur mit einer minimalen Arbeitspräzision hervorbringen bzw. auslösen läßt, d.h., der Spritzvorgang und die daraus resultierende Qualität der Formteile läßt sich bei Spritzaggregaten mit reinem Hydraulikantrieb nicht optimal beeinflussen.

Nach der JP-A-61-244 520 wird für den die Einspritzbewegung der Schnecke im Schneckenzylinder der Plastifiziereinheit hervorbringenden bzw. auslösenden Antrieb der Vorschlag gemacht, anstelle eines bisher verwendeten einzelnen Elektromotors großer Leistung zwei parallel arbeitende, kleine elektrische Servomotoren einzusetzen. Bei diesen kleinen elektrischen Servomotoren handelt es sich um solche von herkömmlicher Bauart ohne jede Besonderheit. Jeder der beiden kleinbauenden elektrischen Servomotoren gehört also offensichtlich der gleichen Bauart an wie ein vorher verwendeter einzelner Elektromotor großer Leistung, lediglich mit dem Unterschied, daß jeder der kleinbauenden elektrischen Servomotoren nur etwa die halbe Antriebsleistung eines einzelnen größeren Motors aufbringt und sich die Antriebsleistungen beider Motoren addieren. Die Baugröße der beiden normalen elektrischen Servomotoren nach JP-A-61-244 520 unterschreitet dabei die Baugröße der beiden Hydraulikzylinder beim Spritzaggregat nach FR-A-2 234 121 praktisch nicht.

Die Erfindung zielt nun darauf ab, Spritzaggregate vorzuschlagen, die es ermöglichen, mit einem verminderten Antriebsaufwand für die Spritzgießmaschinen auszukommen und daher zu einem kompakteren Gesamtaufbau derselben führen.

Gelöst wird diese Aufgabe mit einem Spritzaggregat der gattungsgemäßen Art erfindungsgemäß grundsätzlich dadurch,
- daß mindestens die beiden Antriebe der vierten Baugruppe jeweils mit einem elektrischen Servomotor ausgestattet sind,
- und daß diese elektrischen Servomotoren mit hoher Leistungsdichte und Flüssigkeitskühlung, insbesondere als AC-Synchron-Motoren, ausgebildet sind,
- die miteinander für Synchronlauf elektronisch in Verbindung stehen.

Vorteilhafte Weiterbildungen der Erfindung sind in den abhängigen Ansprüchen beschrieben.

Die erfindungsgemäß vorgeschlagene Nutzung von elektrischen Servomotoren für die Hervorbringung bzw. Auslösung der Einspritzbewegung der Schnecke im Schneckenzylinder der Plastifiziereinheit hat eine höhere Arbeitspräzision zur Folge, d.h., der Spritzvorgang und die daraus resultierende Qualität für die Formteile kann wesentlich verbessert werden. Mit Anwendung der Flüssigkeitskühlung ergibt sich der besondere Vorteil, daß sich elektrische Servomotoren mit hoher Leistungsdichte in Gebrauch nehmen lassen, die einen kompakten und damit raumsparenden Aufbau haben.

Da die durch Anwendung der Flüssigkeitskühlung von den elektrischen Servomotoren abgeführte Wärmeenergie zurückgewonnen und anschließend, bspw. zur Werkzeugtemperierung, genutzt werden kann, stellt sich auch eine Erhöhung des Gesamtwirkungsgrades der Spritzgießmaschine bzw. eine Einsparung von Energiekosten ein.

Mit der DE-A-3 836 507 wird zwar zu einem gattungsfremden Gegenstand, nämlich einer Drosselklappen-Stelleinheit für Brennkraftmaschinen, der Vorschlag gemacht, einen als Stellantrieb für die Drosselklappe vorgesehenen elektrischen Schrittmotor in den der Brennkraftmaschine zugeordneten Kühlwasserkreislauf einzugliedern, damit die Temperatur des Schrittmotors im Normalbetrieb der Brennkraftmaschine auf dem Temperaturniveau des Motorkühlwassers gehalten werden kann.

Abgesehen davon, daß ein Stellmotor für eine Drosselklappe nur geringe Stellkräfte aufzubringen hat, die keine Auslegung für hohe Leistungsdichte erfordern, wird dort der hauptsächlich von der Brennkraftmaschine mit Wärmeenergie beaufschlagte Kühlwasserkreislauf lediglich zur Mitkühlung des elektrischen Stellmotors benutzt. Es kommt hier also nicht darauf an, die durch das Kühlmedium vom elektrischen Servomotor abgeführte Wärmeenergie zurückzugewinnen und anschließend, bspw. zu einer Werkzeugtemperierung, zu nutzen.

Eine besonders vorteilhafte und zweckentsprechende Auslegung wird für ein erfindungsgemäßes Spritzaggregat erhalten, wenn neben den beiden Antrieben der vierten Baugruppe sowohl die beiden Antriebe der zweiten Baugruppe als auch der Antrieb der dritten Baugruppe jeweils mit flüssigkeitsgekühlten, elektrischen Servomotoren ausgestattet sind.

Es können damit nicht nur alle Bewegungsvorgänge eines Spritzaggregates präziser ablaufen als bei der üblichen Benutzung von Hydraulikantrieben. Vielmehr läßt sich der Gesamtaufwand für die Erstellung einer Spritzgießmaschine minimieren, weil keine hydraulische Druckerzeugungsanlage benötigt wird, sondern sich jeder einzelne Antrieb unmittelbar durch verfügbaren Netzstrom speisen läßt. Bewährt hat es sich dabei im letzteren Falle besonders, wenn nach der Erfindung alle elektrischen Servomotoren als Drehstrom-Synchron- bzw. AC-Synchron-Motoren ausgelegt sind.

Wichtig ist nach der Erfindung auch, daß jeder flüssigkeitsgekühlte, elektrische Servomotor mit Untersetzungselementen seines Antriebs in Verbindung steht. Dabei können die Untersetzungselemente der Antriebe für die dritte und die vierte Baugruppe jeweils von Gewindespindeln und zugehörigen Muttern gebildet werden, die neben einer raumsparenden Bauart auch eine sehr exakte Übertragung der Antriebsbewegung gewährleisten.

Für eine raumsparende bzw. kompakte Bauweise eines erfindungsgemäßen Spritzaggregates kann es sich auch als wichtig erweisen, wenn die Untersetzungselemente des Antriebs der zweiten Baugruppe aus einem Planetengetriebe bestehen, das der Schnecke der die erste Baugruppe bildenden Plastifiziereinheit vorgeschaltet ist.

Einer raumsparenden Bauweise des gesamten Spritzaggregates ist es weiterhin dienlich, wenn erfindungsgemäß mindestens die elektrischen Servomotoren der dritten, vorzugsweise aber auch die elektrischen Servomotoren der vierten Baugruppe mit Hohlwellen ausgestattet sind, welche die Antriebsmutter enthalten oder bilden, die wiederum von der Gewindespindel durchsetzt ist.

Aus der Ausstattung der elektrischen Servomotoren mit einer Hohlwelle erwächst der Vorteil, daß über die Motor-Baulänge hinweg zumindest eine entsprechende Teillänge der zum jeweiligen Antrieb gehörenden Gewindespindel zeitweilig raumsparend untergebracht ist und sich daher die Gesamt-Baulänge für das Spritzaggregat minimieren läßt.

Es hat sich aber auch bewährt, wenn die Wirkachsen der Antriebe für die dritte und die vierte Baugruppe miteinander fluchtend angeordnet sind und dabei sowohl die beiden parallelachsigen Antriebe der dritten Baugruppe als auch die beiden parallelachsigen Antriebe der vierten Baugruppe jeweils an einem Querjoch bzw. an einer Traverse angreifen und dabei beide Querjoche bzw. Traversen über ihre Antriebe relativ zum Schneckenzylinder der zur ersten Baugruppe gehörenden Plastifiziereinheit verlagerbar sind.

Nach der Erfindung ist es andererseits aber auch möglich, daß jeder Antrieb der vierten Baugruppe eine mit der Welle des elektrischen Servomotors drehfest gekuppelte Gewinderollspindel aufweist, die mit einem im Querjoch bzw. in der Traverse sitzenden Gewinderollmutter in Stelleingriff steht.

Die Gewindespindel jedes Antriebs der dritten Baugruppe kann erfindungsgemäß unter Zwischenschaltung eines Kraftspeicherpaketes drehfest am zugehörigen Querjoch bzw. an der zugehörigen Traverse angreifen. Hierdurch ist es möglich, während jedes Einspritzvorgangs die elektrischen Servomotoren der dritten Baugruppe stromlos zu schalten, trotzdem aber die Andruckkraft der Spritzdüse gegen das Formwerkzeug sicher zu gewährleisten.

Vorgesehen ist nach der Erfindung auch, daß die die erste Baugruppe bildende Plastifiziereinheit mit ihren beiden Enden zwischen den beiden Querjochen bzw. Traversen liegt und daß alle Antriebe der dritten und der vierten Baugruppe mit der Plastifiziereinheit der ersten Baugruppe zwischen diesen Querjochen bzw. Traversen eine gemeinsame Basis haben.

Vorgesehen ist nach der Erfindung aber auch, daß die die erste Baugruppe bildende Plastifiziereinheit mit ihrem Schneckenzylinder um eine etwa horizontale Querachse verschwenkbar zwischen den Antrieben der dritten und vierten Baugruppe in der gemeinsamen Basis gelagert ist und deren Schnecke über eine ausrüstbare Kupplung mit dem am Querjoch bzw. an der traverse der vierten Baugruppe sitzenden Antrieb der zweiten Baugruppe in Mitnehmerverbindung steht. Wichtig für einen ordnungsgemäßen Betrieb des Spritzaggregates ist auch, daß mit jedem elektrischen Servomotor ein Gebersystem für die Lage- und Geschwindigkeitsregelung gekoppelt ist und daß darüber hinaus die zweite und die dritte Baugruppe längsverschiebbar auf ortsfesten Linearführungselementen der gemeinsamen Basis ruhen.

Der JP-A-62-278 017, der EP-A-0 319 238, der DE-A-4 131 961 und der EP-A-0 427 866 sind zwar bereits verschiedene der vorstehend angegebenen Weiterbildungsmerkmale und die damit erreichbaren Vorteile zu entnehmen. Ihre Anwendung bei einem Spritzaggregat mit den erfindungswesentlichen Lösungsmerkmalen ist jedoch nicht offenbart.

In der Zeichnung ist der Gegenstand der Erfindung in einem Ausführungsbeispiel dargestellt, und zwar zeigen
- Figur 1: teilweise in der Draufsicht und teilweise in einem horizontalen Längsschnitt ein Spritzaggregat für eine Spritzgießmaschine mit einem vier verschiedene Baugruppen umfassenden, modularen Aufbau, wobei der die erste Baugruppe bildenden Plastifiziereinheit drei verschiedene Antriebs-Baugruppen zugeordnet sind, und
- Figur 2: das Spritzaggregat nach Fig. 1 in Richtung des Pfeiles II gesehen.

Die Zeichnung zeigt ein Spritzaggregat 1 für eine Spritzgießmaschine, das einen sogenannten modularen Aufbau hat. Das Spritzaggregat 1 läßt sich also aus mehreren verschiedenen Baugruppen zusammenstellen, wobei in jeder Baugruppe unter mehreren Einzelkomponenten ausgewählt werden kann, die dabei beliebig kombinierbar sind und aufeinander abgestimmt werden können, um eine zum Fertigungsprogramm und zum Werkzeugbestand passende Ausstattung zu erhalten.

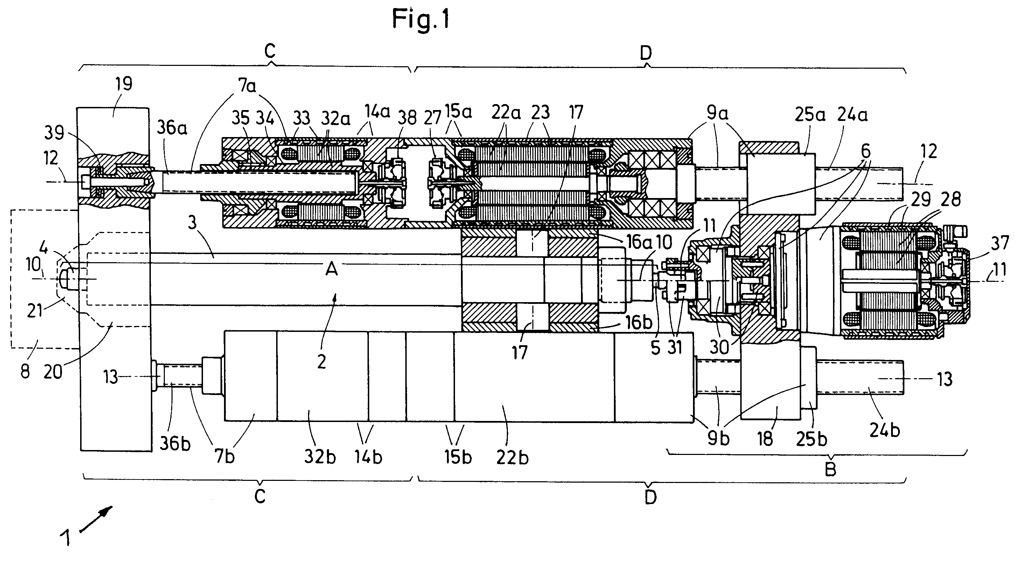

Das in Fig. 1 der Zeichnung gezeigte Ausführungsbeispiel eines Spritzaggregates 1 ist auf der Basis von vier Baugruppen A, B, C, D erstellt, wobei als erste Baugruppe A die eigentliche Plastifiziereinheit 2 des Spritzaggregates 1 vorhanden ist, welche wiederum den Schneckenzylinder 3 mit der nach vorne gerichteten Spritzdüse 4 sowie die darin drehbar gelagerte Schnecke 5 umfaßt, die nach hinten aus dem Schneckenzylinder 3 herausragt.

Die zweite Baugruppe B wird von dem Dosierantrieb 6 für die Schnecke 5 der Plastifiziereinheit 2 gebildet, wobei dieser mit dem aus dem Schneckenzylinder 3 nach hinten herausragenden Ende der Schnecke 5 gekuppelt werden kann.

Als dritte Baugruppe C sind zwei parallelachsig zueinander arbeitende und untereinander völlig baugleiche Antriebe 7a und 7b vorhanden, über die die Relativbewegung der von der Plastifiziereinheit 2 mit Kunststoffschmelze belieferten Spritzdüse 4 gegenüber einem Spritzwerkzeug 8 hervorbringbar ist, von dem in der Zeichnung nur eine Werkzeughälfte durch gestrichelte Linien angedeutet wird.

Zur vierten Baugruppe D gehören wiederum zwei parallelachsig zueinander arbeitende Antriebe 9a und 9b, über welche dabei die Einspritzbewegung der Schnecke 5 im Schneckenzylinder 3 der Plastifiziereinheit 2 als Axialverschiebung hervorbringbar ist.

Erkennbar ist aus Fig. 1 der Zeichnung auch, daß sich die Plastifiziereinheit 2, also die erste Baugruppe A des Spritzaggregates 1 mittig zwischen den beiden parallelachsigen Antrieben 7a und 7b der dritten Baugruppe C sowie 9a und 9b befindet. Mit ihrer Längsachse 10-10 ist dabei die Baugruppe A bzw. die Plastifiziereinheit 2 in ihrer normalen Wirklage exakt fluchtend zur Längsachse 11-11 der Baugruppe B bzw. des Dosierantriebs 6 angeordnet. Darüber hinaus verläuft die Längsachse 10-10 der Baugruppe A bzw. Plastifiziereinheit 2 aber auch parallelachsig zu den beiden Längsachsen 12-12 und 13-13, welche die Antriebe 7a und 9a bzw. 7b und 9b der beiden Baugruppen C und D miteinander gemeinsam haben.

Es geht aus Fig. 1 der Zeichnung auch hervor, daß jeder Antrieb 7a und 7b der Baugruppe C in einem Gehäuse 14a bzw. 14b sowie jeder Antrieb 9a und 9b der Baugruppe D in einem Gehäuse 15a und 15b sitzt. Dabei sind einerseits die Gehäuse 14a und 15a sowie andererseits die Gehäuse 14b und 15b fest miteinander in Verbindung gebracht. Darüber hinaus ist aber auch noch eine feste Verbindung der Gehäuse 15a und 15b mit Lagerwangen 16a und 16b vorgesehen, in denen die Baugruppe A bzw. die diese bildende Plastifiziereinheit 2 um eine horizontale Querachse 17-17 schwenkbeweglich abgestützt bzw. gehalten ist.

Ein wesentlicher Bestandteil sowohl der zweiten Baugruppe B als auch der vierten Baugruppe D ist ein Querjoch bzw. eine Traverse 18, während eine ähnliches Querjoch bzw. eine Traverse 19 der dritten Baugruppe C angehört.

Das Querjoch bzw. die Traverse 18 befindet sich ständig hinter dem nach hinten aus dem Schneckenzylinder 3 der Plastifiziereinheit 2 herausragenden Ende der Schnecke 5, während das Querjoch bzw. die Traverse 19 einerseits der Spritzdüse 4 der Plastifiziereinheit 2 bzw. des Schneckenzylinders 3 zugeordnet ist und andererseits den Träger der einen Hälfte des Spritzwerkzeuges 8 bildet. Im Querjoch bzw. in der Traverse 19 befindet sich dabei eine Ausnehmung bzw. ein Durchlaß 20, durch welchen die Spritzdüse 4 der Plastifiziereinheit 2 gegen die Angußöffnung 21 des Spritzwerkzeuges 8 geführt und an diese angepreßt werden kann.

Mindestens die beiden Antriebe 9a und 9b der vierten Baugruppe D zum Spritzaggregat 1 sind jeweils mit einem elektrischen Servomotor 22a bzw. 22b hoher Leistungsdichte ausgestattet. Dabei sind diese elektrischen Servomotoren 22a und 22b als Wechselstrom- bzw. AC-Motoren ausgelegt und jeder derselben ist mit Flüssigkeitskühlung 23 versehen, damit er - trotz seiner hohen Leistungsdichte - eine kompakte Bauart erhalten kann.

Beide elektrischen Servomotoren 22a und 22b treiben unmittelbar eine Gewindespindel 24a bzw. 24b an, die vorzugsweise als Gewinderollspindel ausgelegt ist, sowie mit einer Antriebsmutter 25a bzw. 25b in Dauereingriff steht, die in diesem Falle als Gewinderollmutter ausgelegt ist. Beide Antriebsmuttern 25a und 25b sind dabei im Querjoch bzw. in der Traverse 18 untergebracht, welche den Träger für die zweite Baugruppe B des Spritzaggregates 1, also den Dosierantrieb 6 bildet.

Wichtig ist, daß die beiden elektrischen Servomotoren 22a und 22b der vierten Baugruppe D des Spritzaggregates 1 miteinander für Synchronlauf in Verbindung stehen, damit sie über die gleichzeitig und gleichmäßig drehenden Gewindespindeln 24a und 24b eine exakte Verlagerungsbewegung des Querjoches bzw. der Traverse 18 mit der davon getragenen zweiten Baugruppe B bzw. dem Dosierantrieb 6 bewirken können.

Bei dem in Fig. 1 gezeigten Ausführungsbeispiel eines Spritzaggregates 1 sind die als Gewinderollspindeln ausgeführten Gewindespindeln 24a und 24b der Antriebe 9a und 9b jeweils drehfest mit dem Läufer des zugehörigen elektrischen Servomotors 22a bzw. 22b verbunden und ragen mit ihrem Gewindeabschnitt ständig über das Ende eines Lagergehäuses hinaus. Dabei durchsetzt dieser Gewindeabschnitt das Querjoch bzw. die Traverse 18 und die darin sitzenden Antriebsmuttern 25a und 25b, und zwar in der Weise, daß sich bei Drehantrieb der Gewindespindeln 24a und 24b das Querjoch bzw. die Traverse 18 entlang den Gewindeabschnitten der Gewindespindeln 24a und 24b verlagern kann.

An seinem von der Gewindespindel 24a bzw. 24b abgewendeten Ende ist jeder der elektrischen Servomotoren 22a und 22b mit einem Gebersystem 27 gekoppelt, durch das eine exakte Lage- und Geschwindigkeitsregelung für die vierte Baugruppe D des Spritzaggregates 1 sichergestellt werden kann.

Zur exakten Lage- und Geschwindigkeitsregelung für die vierte Baugruppe D des Spritzaggregates 1 läßt sich aber anstelle des vorgenannten Gebersystems 27 auch ein Analog-Wegmeßsystem, bspw. in Form eines Linearpotentiometers einsetzen, das gegebenenfalls durch die Bewegungen der Gewindespindeln 24a bzw. 24b beeinflußbar ist.

Aus Fig. 1 der Zeichnung geht hervor, daß der Dosierantrieb 6 der zweiten Baugruppe B des Spritzaggregates 1 ebenfalls mit einem elektrischen Servomotor 28 ausgestattet ist, der eine Flüssigkeitskühlung 29 hat, damit er bei hoher Leistungsdichte eine kompakte Bauweise erhalten kann.

Dieser elektrische Servomotor 28 ist dabei an die Rückseite des Querjoches bzw. der Traverse 18 angeflanscht und treibt als Untersetzungssystem ein Planetengetriebe 30 an, welches teilweise im Querjoch bzw. in der Traverse 18 untergebracht ist und teilweise nach vorne über diese hinausragt.

An der Abtriebsseite dieses Planetengetriebes 30 befindet sich eine Kupplung 31, die es möglich macht, das aus dem Schneckenzylinder 3 der Plastifiziereinheit 3 herausragende Ende der Schnecke 5 wahlweise an den Dosierantrieb 6 der zweiten Baugruppe B anzukuppeln oder aber es hiervon zu trennen. Nach dem Lösen der Kupplung 31 kann die gesamte Plastifiziereinheit 2 um die horizontale Querachse 17-17 - zumindest begrenzt - verschwenkt werden, damit das freie Ende der Schnecke 5 dann aus dem Wirkbereich der Kupplung 31 gebracht werden kann. Letzteres ist aber erst möglich, nachdem zuvor das Querjoch bzw. die Traverse 19 der dritten Baugruppe C des Spritzaggregates 1 über dessen Antriebe 7a und 7b so weit nach vorne bzw. nach links gefahren worden ist, daß die Spritzdüse 4 der Plastifiziereinheit 2 vom Querjoch bzw. von der Traverse 19 völlig freigegeben wird.

Auch die Antriebe 7a und 7b der dritten Baugruppe C des Spritzaggregates 1 sind jeweils als elektrische Servomotoren 32a und 32b mit hoher Leistungsdichte ausgeführt und deshalb mit einer Flüssigkeitskühlung 33 ausgestattet.

Eine Besonderheit dieser beiden elektrischen Servomotoren 32a und 32b liegt dabei noch darin, daß deren Läufer eine Hohlwelle 34 hat, welche eine Antriebsmutter 35 enthält oder bildet, mit der jeweils eine Gewindespindel 36a bzw. 36b in Dauereingriff steht.

Jede der beiden Gewindespindeln 36a und 36b ist dabei drehfest am Querjoch bzw. an der Traverse 19 der dritten Baugruppe C des Spritzaggregates 1 verankert. Die Drehung der Hohlwellen 34 bzw. Antriebsmuttern 35 beider elektrischer Servomotoren 32a und 32b führt dabei zu einer Axialverlagerung der beiden zugehörigen Gewindespindeln 36a und 36b und damit zu einer entsprechenden Verschiebung des Querjoches bzw. der Traverse 19 relativ zu der die erste Baugruppe A des Spritzaggregates 1 bildenden Plastifiziereinheit 2. Selbstverständlich ist es auch im Falle der dritten Baugruppe C des Spritzaggregates 1 wichtig, daß die beiden elektrischen Servomotoren 32a und 32b miteinander für Synchronlauf in Verbindung stehen, damit eine einwandfrei winkelrechte Verlagerung des Querjoches bzw. der Traverse 19 sichergestellt wird.

Die Hohlwellen-Bauart der mit Flüssigkeitskühlung 33 arbeitenden elektrischen Servomotoren 32a und 32b führt dazu, daß die dritte Baugruppe B des Spritzaggregates 1 mit einer minimalen Baulänge erstellt werden kann.

Selbstverständlich ist es bei Bedarf auch möglich, die mit Flüssigkeitskühlung 23 versehenen elektrischen Servomotoren 22a und 22b der vierten Baugruppe D des Spritzaggregates 1 in Hohlwellen-Bauart einzusetzen, wenn es darauf ankommt, auch dort eine minimale Baulänge zu gewährleisten. In diesem Falle müßten dann die Gewindespindeln 24a und 24b auch drehfest mit dem Querjoch bzw. der Traverse 18 in Verbindung gebracht werden, und die Antriebsmuttern 25a und 25b müßten aus dem Querjoch bzw. der Traverse 18 entfernt und in die Hohlwellen der elektrischen Servomotoren 22a und 22b integriert werden.

Es kann der Fig. 1 der Zeichnung entnommen werden, daß auch der elektrische Servomotor 28 des Dosierantriebs 6 der zweiten Baugruppe B mit einem Gebersystem 37 für die Lage- und Geschwindigkeitsregelung gekoppelt ist und daß die elektrischen Servomotoren 32a und 32b der dritten Baugruppe C des Spritzaggregates 1 ebenfalls ein Gebersystem 38 für die Lage- und Geschwindigkeitsregelung enthalten.

Selbstverständlich lassen sich auch anstelle der Gebersysteme 37 und 38 für die zweite Baugruppe B und die dritte Baugruppe C des Spritzaggregates 1 Analog-Wegmeßsysteme, z.B. in Form von Linearpotentiometern für die Lage- und Geschwindigkeitsregelung in Gebrauch nehmen.

Sämtliche elektrischen Servomotoren 22a, 22b; 28; 32a, 32b gelangen vorzugsweise als Drehstrom-Synchron- bzw. AC-Synchron-Motoren zum Einsatz. Hieraus ergibt sich der Vorteil, daß das gesamte Spritzaggregat 1 sich unmittelbar mit verfügbarem Netzstrom speisen läßt, also nicht mit einer zusätzlichen Druckerzeugungsanlage ausgestattet werden muß. Vorteilhaft bei dieser Ausstattung eines Spritzaggregates 1 ist darüber hinaus, daß die mit elektrischen Servomotoren arbeitenden Antriebe der drei Baugruppen B, C und D des Spritzaggregates 1 eine höhere Arbeitspräzision gewährleisten und dadurch die Schaffung einer Spritzgießmaschine ermöglichen, mit der sich Formteile höchster Qualität fertigen lassen.

In Fig. 1 der Zeichnung ist noch zu sehen, daß die beiden Gewindespindeln 36a und 36b der zur dritten Baugruppe C des Spritzaggregates 1 gehörenden Antriebe 7a und 7b unter Zwischenschaltung je eines Kraftspeicherpaketes 39 am Querjoch bzw. an der Traverse 19 angreifen. Hierdurch ist es möglich, die elektrischen Servomotoren 32a und 32b nach dem Anlegen der Spritzdüse 4 der Plastifiziereinheit 2 an die Angußöffnung 21 des Spritzwerkzeuges 8 stromlos zu schalten, während mit Hilfe der elektrischen Servomotoren 22a und 22b der Baugruppe D der Einspritzvorgang der Kunststoffschmelze in den Formhohlraum des Spritzwerkzeugs 8 stattfindet. Mit Hilfe der Kraftspeicherpakete 39 wird die Andruckkraft der Spritzdüse 4 an die Angußöffnung 21 des Spritzwerkzeuges 8 auch bei stromlosen elektrischen Servomotoren 32a und 32b aufrechterhalten.

Ein Spritzaggregat 1 mit modularem Aufbau aus verschiedenen Baugruppen A, B, C und D, bei dem sämtliche Antriebe 6; 7a, 7b; 9a, 9b mit flüssigkeitsgekühlten, elektrischen Servomotoren 28; 32a, 32b; 22a, 22b ausgestattet sind, eröffnet die besonders vorteilhafte Möglichkeit, gleichzeitig mehrere Bewegungsabläufe geregelt abzufahren und dadurch die Arbeitsweise des gesamten Spritzaggregates 1 zu optimieren.

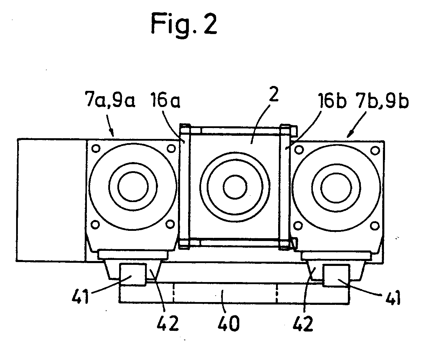

Der Fig. 2 der Zeichnung kann entnommen werden, daß die Plastifiziereinheit 2 der ersten Baugruppe A mittig zwischen den Antrieben 7a, 9a und 7b, 9b der dritten Baugruppe C und der vierten Baugruppe D angeordnet ist und daß dabei alle Antriebe 7a, 7b und 9a, 9b dieser dritten und vierten Baugruppe C und D zusammen mit der Plastifiziereinheit 2 der ersten Baugruppe A eine gemeinsame Basis 40 auf der (im übrigen nicht dargestellten) Spritzgießmaschine haben. Dabei ist es vorteilhaft, wenn die gemeinsame, ortsfeste Basis 40 mit Linearführungselementen 41 ausgestattet ist, auf denen die dritte Baugruppe C und die vierte Baugruppe D gemeinsam längsverschiebbar, bspw. über klauenartige Führungsschuhe 42 ruhen. Mittelbar, nämlich über die Lagerwangen 16a und 16b und die in diese eingreifende horizontale Querachse 17-17 wird dabei von der gemeinsamen ortsfesten Basis 40 auch die Plastifiziereinheit 2 getragen und ebenso mittelbar ist hierauf über die Gewindespindeln 24a und 24b sowie das Querjoch bzw. die Traverse 18 die zweite Baugruppe B des Spritzaggregates 1 abgestützt.

Die Verwendung von flüssigkeitsgekühlten, elektrischen Servomotoren für alle Antriebe des Spritzaggregates 1 hat nicht nur den Vorteil, daß man mit minimalen Baugrößen auskommt. Vielmehr ist es von besonderer Bedeutung, daß durch den Einsatz der flüssigkeitsgekühlten, elektrischen Servomotoren für alle Antriebe im Stillstand sehr hohe Drehmomente aufgebracht werden können, was sich auf die Arbeitsweise des gesamten Spritzaggregates 1 günstig auswirkt.

Als vorteilhaft erweist es sich aber auch, daß die durch das Wasser als Kühlmedium von den elektrischen Servomotoren abgeführte Wärmeenergie zurückgewonnen und anschließend, bspw. zur Werkzeugtemperierung, genutzt werden kann. Es stellt sich somit eine Erhöhung des Gesamtwirkungsgrades der Spritzgießmaschine bzw. eine Einsparung von Energiekosten ein.

Ein Spritzaggregat 1 der vorstehend beschriebenen Bauart eignet sich auch in besonderem Maße zum Einsatz unter Reinraum-Bedingungen, weil die en elektrischen Servomotoren keine unerwünschten Luftverwirbelungen erzeugen können.

Das in der Zeichnung dargestellte und anhand derselben beschriebene Spritzaggregat 1 hat für seine dritte Baugruppe C und seine vierte Baugruppe D jeweils zwei gemeinsame bzw. miteinander fluchtende Wirkachsen 12-12 und 13-13, die in Symmetrielage zur ersten Baugruppe A und zur zweiten Baugruppe B angeordnet sind. Hieraus resultiert der Vorteil, daß bei gleichzeitiger Betätigung der Antriebe 7a und 7b bzw. 9a und 9b keine Momente auftreten können, welche über die Linearführungselemente 41 und die Führungsschuhe 42 von der gemeinsamen Basis 40 abgefangen werden müßten.

Die Linearführungselemente 41 und die Führungsschuhe 42 der gemeinsamen, ortsfesten Basis 40 machen es aber möglich, in bestimmten Fällen auch nur mit den Antrieben zu arbeiten, die in einer der beiden Wirkachsen 12-12 bzw. 13-13 angeordnet sind. In diesem Falle werden dann die auftretenden Momente über die Linearführungen abgefangen.

Da in beiden Wirkachsen 12-12 und 13-13 die Antriebe 7a, 7b bzw. 9a, 9b jeweils elektrische Servomotoren 32a, 32b bzw. 22a, 22b mit gleichen Leistungsdaten benutzen, ist eine entsprechend variable Betriebsweise des Spritzaggregates 1 möglich, je nach dem ob die Antriebe nur in einer oder aber in beiden Wirkachsen 12-12 und 13-13 genutzt werden.

Denkbar wäre es schließlich auch, ein Spritzaggregat 1 mit vier Wirkachsen zu bauen, wobei dann in jeder derselben sowohl für die dritte Baugruppe C als auch für die vierte Baugruppe D ein elektrischer Servomotor vorzusehen ist.

### Liste der Bezugszeichen

- A: Baugruppe
- B: Baugruppe
- C: Baugruppe
- D: Baugruppe
- 1: Spritzaggregat
- 2: Plastifiziereinheit
- 3: Schneckenzylinder
- 4: Spritzdüse
- 5: Schnecke
- 6: Dosierantrieb
- 7a, 7b: Antriebe
- 8: Spritzwerkzeuge
- 9a, 9b: Antriebe
- 10-10: Längsachse
- 11-11: Längsachse
- 12-12: Wirkachse
- 13-13: Wirkachse
- 14a, 14b: Gehäuse
- 15a, 15b: Gehäuse
- 16a, 16b: Lagerwange
- 17-17: horizontale Querachse
- 18: Querjoch bzw. Traverse
- 19: Querjoch bzw. Traverse
- 20: Ausnehmung bzw. Durchlaß
- 21: Angußöffnung
- 22a, 22b: elektrischer Servomotor
- 23: Flüssigkeitskühlung
- 24a, 24b: Gewindespindel/Gewinderollspindel
- 25a, 25b: Antriebsmutter/Gewinderollmutter
- 27: Gebersystem
- 28: elektrischer Servomotor
- 29: Flüssigkeitskühlung
- 30: Planetengetriebe
- 31: Kupplung
- 32a, 32b: elektrischer Servomotor
- 33: Flüssigkeitskühlung
- 34: Hohlwelle
- 35: Antriebsmutter
- 36a, 36b: Gewindespindel
- 37: Gebersystem
- 38: Gebersystem
- 39: Kraftspeicherpaket
- 40: gemeinsame Basis
- 41: Linearführungselemente
- 42: Führungsschuhe

## Patentansprüche

1. Spritzaggregat (1) für Spritzgießmaschinen mit einem mehrere Baugruppen (A, B, C und D) umfassenden modularen Aufbau,
- bei dem eine erste Baugruppe (A) aus der von einem Schneckenzylinder (3) und einer Schnecke (5) gebildeten Plastifiziereinheit (2) besteht,
- bei dem eine zweite Baugruppe (B) von dem Dosierantrieb (6) für die Schnecke (5) der Plastifiziereinheit (2) gebildet ist,
- bei dem eine dritte Baugruppe (C) zwei parallelachsig zueinander arbeitende Antriebe (7a und 7b) umfaßt, über die die Düsenbewegung zwischen der Plastifiziereinheit (2) und dem Spritzwerkzeug (8) betätigbar ist,
- und bei dem eine vierte Baugruppe (D) ebenfalls zwei parallelachsig zueinander arbeitende Antriebe (9a und 9b) aufweist, über die die Einspritzbewegung der Schnecke (5) im Schneckenzylinder (3) der Plastifiziereinheit (2) als Axialverschiebung hervorbringbar ist,
- wobei sich die Plastifiziereinheit (2) mittig zwischen den beiden parallelachsigen Antrieben (7a und 7b sowie 9a und 9b) der dritten und vierten Baugruppe (C und D) befindet,
**dadurch gekennzeichnet,**
- daß mindestens die beiden Antriebe (9a und 9b) der vierten Baugruppe (D) jeweils mit einem elektrischen Servomotor (22a und 22b) ausgestattet sind,
- und daß diese elektrischen Servomotoren mit hoher Leistungsdichte und Flüssigkeitskühlung (23), insbesondere als AC-Synchron-Motoren, ausgebildet sind,
- die miteinander für Synchronlauf elektronisch in Verbindung stehen.

2. Spritzaggregat nach Anspruch 1,
**dadurch gekennzeichnet,**
daß auch der Antrieb (6) der zweiten Baugruppe (B) sowie die beiden Antriebe (7a und 7b) der dritten Baugruppe (C) jeweils mit flüssigkeitsgekühlten (29 bzw. 33), elektrischen Servomotoren (28 bzw. 32a, 32b) - insbesondere AC-Synchron-Motoren - ausgestattet sind,
und daß dabei die beiden Servomotoren (32a und 32b) der Antriebe (7a und 7b) elektrisch miteinander synchronisiert sind.

3. Spritzaggregat nach einem der Ansprüche 1 und 2,
**dadurch gekennzeichnet,**
daß alle elektrischen Servomotoren (22a, 22b; 28; 32a, 32b) als Drehstrom-Synchron- bzw. AC-Synchron-Motoren ausgelegt sind.

4. Spritzaggregat nach einem der Ansprüche 1 bis 3,
**dadurch gekennzeichnet,**
daß jeder eine Flüssigkeitskühlung (23; 29; 33) aufweisende, elektrische Servomotor (22a, 22b; 28; 32a, 32b) mit Untersetzungselementen (24a, 25a, 24b, 25b; 30; 35, 36a, 36b) seines Antriebes (9a, 9b; 6; 7a, 7b) in Verbindung steht.

5. Spritzaggregat nach einem der Ansprüche 1 bis 4,
**dadurch gekennzeichnet,**
daß die Untersetzungselemente der Antriebe (7a, 7b) für die dritte Baugruppe (C) und die Untersetzungselemente der Antriebe (9a, 9b) für die vierte Baugruppe (D) jeweils von Gewindespindeln (36a, 36b bzw. 24a, 24b) und zugehörigen Muttern (35 bzw. 25a, 25b) gebildet sind.

6. Spritzaggregat nach einem der Ansprüche 1 bis 4,
**dadurch gekennzeichnet,**
daß die Untersetzungselemente des Antriebs (6) der zweiten Baugruppe (B) aus einem Planetengetriebe (30) bestehen.

7. Spritzaggregat nach einem der Ansprüche 1 bis 6,
**dadurch gekennzeichnet,**
daß mindestens die elektrischen Servomotoren (32a und 32b) der dritten Baugruppe (C), vorzugsweise aber auch die elektrischen Servomotoren (22a und 22b) der vierten Baugruppe (D), mit Hohlwellen (34) ausgestattet sind, welche die Antriebsmutter (35) enthalten oder bilden, wobei diese Antriebsmutter (35) von der Gewindespindel (36a bzw. 36b) durchsetzt ist.

8. Spritzaggregat nach einem der Ansprüche 1 bis 7,
**dadurch gekennzeichnet,**
daß die Wirkachsen (12-12 und 13-13) der Antriebe (7a und 9a bzw. 7b und 9b) für die dritte Baugruppe (C) und die vierte Baugruppe (D) miteinander fluchtend angeordnet sind.

9. Spritzaggregat nach einem der Ansprüche 1 bis 8,
**dadurch gekennzeichnet,**
daß sowohl die beiden parallelachsigen Antriebe (7a, 7b) der dritten Baugruppe (C) als auch die beiden parallelachsigen Antriebe (9a, 9b) der vierten Baugruppe (D) jeweils an einem Querjoch bzw. an einer Traverse (19 bzw. 18) angreifen und dabei beide Querjoche bzw. Traversen (18 und 19) über ihre Antriebe (9a, 9b und 7a, 7b) relativ zum Schneckenzylinder (3) der zur ersten Baugruppe (A) gehörenden Plastifiziereinheit (2) verlagerbar sind.

10. Spritzaggregat nach einem der Ansprüche 1 bis 9,
**dadurch gekennzeichnet,**
daß jeder Antrieb (9a, 9b) der vierten Baugruppe (D) eine mit der Welle des elektrischen Servomotors (22a bzw. 22b) drehfest gekuppelte Gewinderollspindeln (24a bzw. 24b) aufweist, die mit einer im Querjoch bzw. in der Traverse (18) sitzenden Gewinderollmutter (25a bzw. 25b) in Stelleingriff steht.

11. Spritzaggregat nach einem der Ansprüche 1 bis 10,
**dadurch gekennzeichnet,**
daß die Gewindespindel (36a bzw. 36b) jedes Antriebs (7a bzw. 7b) der dritten Baugruppe (C) unter Zwischenschaltung eines Kraftspeicherpaketes (39) drehfest am zugehörigen Querjoch bzw. an der Traverse (19) angreift.

12. Spritzaggregat nach einem der Ansprüche 1 bis 11,
**dadurch gekennzeichnet,**
daß die die erste Baugruppe (A) bildende Plastifiziereinheit (2) mit ihren beiden Enden zwischen den beiden Querjochen bzw. Traversen (18 und 19) liegt, und daß alle Antriebe (7a und 7b) der dritten Baugruppe (C) und alle Antriebe (9a und 9b) der vierten Baugruppe (D) mit der Plastifiziereinheit (2) der ersten Baugruppe (A) zwischen diesen Querjochen bzw. Traversen (18 und 19) eine gemeinsame Basis (40, 41, 42) haben.

13. Spritzaggregat nach einem der Ansprüche 1 bis 12,
**dadurch gekennzeichnet,**
daß die die erste Baugruppe (A) bildende Plastifiziereinheit (2) mit ihrem Schneckenzylinder (3) um eine etwa horizontale Querachse (17-17) verschwenkbar zwischen den Antrieben (7a, 7b) der dritten Baugruppe (C) und den Antrieben (9a, 9b) der vierten Baugruppe (D) in der gemeinsamen Basis (40) gelagert ist (16a, 16b, 17-17) und deren Schnecke (5) über eine ausrückbare Kupplung (31) mit dem am Querjoch bzw. an der Traverse (18) der vierten Baugruppe (D) sitzenden Antrieb (6) der zweiten Baugruppe (B) in Mitnehmerverbindung steht.

14. Spritzaggregat nach einem der Ansprüche 1 bis 13,
**dadurch gekennzeichnet,**
daß mit jedem elektrischen Servomotor (22a, 22b; 32a, 32b; 28) ein Gebersystem (27; 38; 37) für die Lage- und Geschwindigkeitsregelung gekoppelt ist.

15. Spritzaggregat nach einem der Ansprüche 1 bis 14,
**dadurch gekennzeichnet,**
daß die dritte Baugruppe (C) und die vierte Baugruppe (D) des Spritzaggregates (1) gemeinsam längsverschiebbar auf ortsfesten Linearführungselementen (41, 42) der gemeinsamen Basis (40) ruhen.

16. Spritzaggregat nach einem der Ansprüche 1 bis 13,
**dadurch gekennzeichnet,**
daß den Antrieben (6; 7a, 7b; 9a, 9b) der verschiedenen Baugruppen (A, B, C und D) ein Analog-Wegmeßsystem, bspw. Linearpotentiometer, für die Lage- und Geschwindigkeitsregelung der flüssigkeitsgekühlten, elektrischen Servomotoren (28 32a, 32b; 22a, 22b) zugeordnet sind.

## Claims

1. Injection unit (1) for injection moulding machine with a modular construction comprising several subassemblies (A, B, C and D),
- in which a first subassembly (A) consists of the plasticising unit (2) formed by a worm cylinder (3) and a worm (5),
- in which a second subassembly (B) is formed by the metering drive (6) for the worm (5) of the plasticising unit (2),
- in which a third subassembly (C) comprises two drives (7a and 7b) which operate axially parallel relative to one another and by way of which the nozzle movement between the plasticising unit (2) and the injection tool (8) is actuable,
- and in which a fourth subassembly (D) similarly comprises two drives (9a and 9b) which operate axially parallel relative to one another and by way of which the injection movement of the worm (5) in the worm cylinder (3) of the plasticising unit (2) is producible as axial displacement,
- wherein the plasticising unit (2) is disposed centrally between the two axially parallel drives (7a and 7b as well as 9a and 9b) of the third and fourth subassemblies (C and D),
characterised thereby
- that at least the two drives (9 and 9b) of the fourth subassembly (D) are each equipped with a respective electrical servomotor (22a and 22b),
- and that these electrical servomotors are constructed with high power density and liquid cooling (23), particularly as alternating current synchronous motors,
- which are electronically connected together for synchronous running.

2. Injection unit according to claim 1, characterised thereby that not only the drive (6) of the second subassembly (B) but also the two drives (7a and 7b) of the third subassembly (C) are equipped with respective liquid-cooled (29 or 33), electrical servomotors (28 or 32a, 32b) - especially alternating current synchronous motors - and in that case the two servomotors (32a and 32b) of the drives (7a and 7b) are electrically synchronised with one another.

3. Injection unit according to one of claims 1 and 2, characterised thereby that all electrical servomotors (22a, 22b; 28; 32a, 32b) are designed as three-phase current synchronous motors or alternating current synchronous motors.

4. Injection unit according to one of claims 1 to 3, characterised thereby that each electrical servomotor (22a, 22b; 28; 32a, 32b) having a liquid cooling (23; 29; 33) is connected with speed reduction elements (24a, 25a, 24b, 25b; 30; 35, 36a, 36b) of its drive (9a, 9b; 6; 7a, 7b).

5. Injection unit according to one of claims 1 to 4, characterised thereby that the speed reduction elements of the drives (7a, 7b) for the third subassembly (C) and the speed reduction elements of the drives (9a, 9b) for the fourth subassembly (D) are formed each time by threaded spindles (36a, 36b or 24a, 24b) and associated nuts (35 or 25a, 25b).

6. Injection unit according to one of claims 1 to 5, characterised thereby that the speed reduction elements of the drive (6) of the second subassembly (B) consists of a planetary gear (30).

7. Injection unit according to one of claims 1 to 6, characterised thereby that at least the electrical servomotors (32a and 32b) of the third subassembly (C), preferably, however, also the electrical servomotors (22a and 22b) of the fourth subassembly (D), are equipped with hollow shafts (34), which contain or form the drive nut (35), wherein this drive nut (35) is penetrated by the threaded spindle (36a or 36b).

8. Injection unit according to one of claims 1 to 7, characterised thereby that the effective axes (12-12 and 13-13) of the drives (7a and 9a or 7b and 9b) for the third subassembly (C) and the fourth subassembly (D) are arranged in alignment with one another.

9. Injection unit according to one of the claims 1 to 8, characterised thereby that not only the two axially parallel drives (7a, 7b) of the third subassembly (C) but also the two axially parallel drives (9a, 9b) of the fourth subassembly (D) each engage at a transverse yoke or at a crossbeam (19 or 18) and in that case the two transverse yokes or crossbeams (18 and 19) are displaceable by way of the drives (9a, 9b and 7a, 7b) relative to the worm cylinder (3) of the plasticising unit (2) belonging to the first subassembly (A).

10. Injection unit according to one of claims 1 to 9, characterised thereby that each drive (9a, 9b) of the fourth subassembly (D) has a threaded roller spindle (24a or 24b) which is rotationally firmly coupled with the shaft of the electrical servomotor (22a or 22b) and which stands in setting engagement with a threaded roller nut (25a or 25b) seated in the transverse yoke or in the crossbeam (18).

11. Injection unit according to one of claims 1 to 10, characterised thereby that the threaded spindle (36a or 36b) of each drive (7a or 7b) of the third subassembly (C) engages rotationally fast at the associated transverse yoke or at the crossbeam (19) with interposition of a force storage packet (39).

12. Injection unit according to one of claims 1 to 11, characterised thereby that the plasticising unit (2) forming the first subassembly (A) lies by its two ends between the two transverse yokes or crossbeams (18 and 19) and that all drives (7a and 7b) of the third subassembly (C) and all drives (9c and 9b) of the fourth subassembly (D) together with the plasticising unit (2) of the first subassembly (A) have a common base (40, 41, 42) between these transverse yokes or crossbeams (18 and 19).

13. Injection unit according to one of claims 1 to 12, characterised thereby that the plasticising unit (2) forming the first subassembly (A) is mounted (16a, 16b, 17-17) in the common base (40) by its worm cylinder (3) to be pivotable about an approximately horizontal transverse axis (17-17) between the drives (7a, 7b) of the third subassembly (C) and the drives(9a, 9b) of the fourth subassembly (D) and the worm (5) thereof stands in entraining connection by way of a disengageable clutch (31) with the drive (6), which is seated at the transverse yoke or at the crossbeam (18) of the fourth subassembly (D), of the second subassembly (B).

14. Injection unit according to one of claims 1 to 13, characterised thereby that a transmitter system (27; 38; 34) for positional and speed regulation is coupled to each electrical servomotor (22a, 22b; 32a, 32b; 28).

15. Injection unit according to one of claims 1 to 14, characterised thereby that the third subassembly (C) and the fourth subassembly (D) of the injection unit (1) rest on stationary linear guide elements (41, 42) of the common base (40) to be longitudinally displaceable together.

16. Injection unit according to one of claims 1 to 13, characterised thereby that the drives (6; 7a, 7b; 9a, 9b) of the different subassemblies (A, B, C and D) are associated with an analog travel measuring system, for example linear potentiometer, for the positional and speed regulation of the liquid-cooled, electrical servomotors (28, 32a, 32b; 22a, 22b).

## Revendications

1. Unité d'injection (1) pour machines de moulage par injection présentant une construction modulaire comprenant plusieurs groupes de construction (A,B,C et D),
- un premier groupe de construction (A) étant constitué par l'unité de plastification (2) formée par le cylindre à vis (3) et la vis (5),
- un deuxième groupe de construction (B) étant constitué par le dispositif d'entraînement et de dosage (6) destiné à la vis (5) de l'unité de plastification (2),
- un troisième groupe de construction (C) comportant deux dispositifs d'entraînement à axes parallèles (7a et 7b) qui actionnent le mouvement de douille entre l'unité de plastification (2) et le moule d'injection (8),
- et un quatrième groupe de construction (D) comportant également deux dispositifs d'entraînement opérant parallèlement l'un à l'autre (9a et 9b), qui génèrent le mouvement d'injection de la vis (5) dans le cylindre de vis (3) de l'unité de plastification (2) sous forme d'un déplacement axial,
- l'unité de plastification (2) se trouvant médianement entre les deux dispositifs d'entraînement à axes parallèles (7a et 7b) ainsi que ( 9a et 9b) du troisième et du quatrième groupe de construction (C et D),
caractérisée,
- en ce qu'au moins les deux dispositifs d'entraînement (9a, et 9b) du quatrième groupe de construction (D) sont chacun équipés d'un servomoteur électrique (22a et 22b),
- et en ce que ces servomoteurs électriques sons des moteurs à rendement élevé, équipés d'un refroidissement par liquide (23), notamment des moteurs AC synchrones,
- qui sont reliés électroniquement l'un à l'autre en vue du fonctionnement synchronisé.

2. Unité d'injection selon la revendication 1
caractérisée
en ce que le dispositif d'entraînement (6) du deuxième groupe de construction (B) ainsi que les deux dispositifs d'entraînement (7a et 7b) du troisième groupe de construction (C) sont également équipés chacun de servomoteurs électriques (28 ou 32a, 32b) refroidis par liquide (29 ou 33), notamment des moteurs AC synchrones, et en ce que, dans ce cas, les deux servomoteurs (32a et 32b) des dispositifs d'entraînement (7a et 7b) sont synchronisés électriquement l'un par rapport à l'autre.

3. Unité d'injection selon l'une des revendications 1 et 2
caractérisée
en ce que tous les servomoteurs électriques (22a,22b; 28; 32a, 32b) consistent en des moteurs synchrones à courant triphasé ou alternatif.

4. Unité d'injection selon l'une des revendications 1 à 3
caractérisée
en ce que chaque servomoteur électrique (22a,22b;28;32a,32b) équipé d'un refroidissement par liquide (23;29;33) est en relation avec des organes réducteurs (24a,25a,24b,25b;30;35; 36a,36b) du dispositif d'entraînement correspondant.

5. Unité d'injection selon l'une des revendications 1 à 4
caractérisée
en ce que les organes réducteurs des dispositifs d'entraînement (7a, 7b) du troisième groupe de construction (C) et les organes réducteurs des dispositifs d'entraînement (9a,9b) du quatrième groupe de construction (D) sont constitués chacun de broches filetées (36a,36b ou 24a,24b) et d'écrous correspondants (35 ou 25a,25b).

6. Unité d'injection selon l'une des revendications 1 à 4
caractérisée
en ce que les organes réducteurs du dispositif d'entraînement (6) du deuxième groupe de construction (B) consistent en des réducteurs planétaires (30).

7. Unité d'injection selon l'une des revendications 1 à 6
carctérisée
en ce qu'au moins les servomoteurs électriques (32a et 32b) du troisième groupe de construction (C), de préférence toutefois aussi les servomoteurs électriques (22a et 22b) du quatrième groupe de construction (D) sont équipés d'arbres creux (34) qui comportent ou forment l'écrou d'entraînement (35) traversé par la broche filetée (36a ou 36b).

8. Unité d'injection selon l'une des revendications 1 à7
caractérisée
en ce que les axes efficaces (12-12 et 13-13) des dispositifs d'entraînement (7a et9a ou 7b et 9b) du troisième groupe de construction (C) et du quatrième groupe de construction (D) sont agencés l'un dans l'alignement de l'autre.

9. Unité d'injection selon l'une des revendications 1 à 8
caractérisée
en ce que les deux dispositifs d'entraînement à axes parallèles (7a,7b) du troisième groupe de construction (C) ainsi que les deux dispositifs d'entraînement à axes parallèles (9a,9b) du quatrième groupe de construction (D) agissent chacun sur un pont de travée ou sur une traverse (19 ou 18) et en ce que les deux ponts de gravée ou traverses (18,19) sont ainsi déplaçables par leurs dispositifs d'entraînement (9a,9b et 7a,7b) par rapport au cylindre de vis (3) de l'unité de plastification (2) faisant partie du premier groupe de construction (A).

10. Unité d'injection selon l'une des revendications 1 à 9
caractérisée
en ce que chaque dispositif d'entraînement (9a,9b) du quatrième groupe de construction (D) comporte une broche filetée (24a ou 24b) qui est couplée de façon fixe en rotation à l'arbre du servomoteur électrique (22a ou 22b) et qui est en interaction avec un écrou fileté (25a ou 25b) logé dans le pont de travée ou dans la traverse (18).

11. Unité d'injection selon l'une des revendications 1 à 10
caractérisée
en ce que la broche filetée (36a ou 36b) de chaque dispositif d'entraînement (7a ou 7b) du troisième groupe de construction (C) agit de façon fixe en rotation sur le pont de travée ou la traverse (19) correspondante, par l'intermédiaire d'un accumulateur d'énergie (39).

12. Unité d'injection selon l'une des revendications 1 à 11
caractérisée
en ce que l'unité de plastification (2) qui constitue le premier groupe de construction (A) est disposée avec ses extrémités entre les deux ponts de travée ou traverses (18 et 19), et en ce que tous les dispositifs d'entraînement (7a et 7b) du troisième groupe de construction (C) et tous les dispositifs d'entraînement (9a et 9b) du quatrième groupe de construction (D) ont une base commune (40,41,42) avec l'unité de plastification (2) du premier groupe de construction (A) entre ces ponts de travée ou traverses (18 et 19).

13. Unité d'injection selon l'une des revendications 1 à 12
caractérisée en ce que l'unité de plastification (2) qui constitue le premier groupe de construction (A) est basculable avec son cylindre de vis (3) autour d'un axe transversal approximativement horizontal (17-17) et est logée (16a, 16b,17-17) entreles dispositifs d'entraînement (7a,7b) du troisième groupe de construction (C) et les dispositifs d'entraînement (9a,9b) du quatrième groupe de construction (D), dans la base commune (40), et en ce que sa vis (5) est reliée de façon à pouvoir être entraînée, par l'intermédiaire d'un accouplement débrayable (31), au dispositif d'entraînement (6) du deuxième groupe de construction (B), agencé au pont de travée ou à la traverse (18) du quatrième groupe de construction (D).

14. Unité d'injection selon l'une des revendications 1 à 13
caractérisée
en ce qu'un ensemble de palpeurs (27;38;37) pour la régulation de la position et de la vitesse est associé à chaque servomoteur électrique (22a,22b;32a,32b;28).

15. Unité d'injection selon l'une des revendications 1 à 14
caractérisée
en ce que le troisième groupe de construction (C) et le quatrième groupe de construction (D) de l'unité d'injection (1) reposent de façon longitudinalement déplaçables simultanément sur des éléments de guidage linéaires fixes (41,42) de la base commune (40).

16. Unité d'injection selon l'une des revendications 1 à13
caractérisée
en ce qu'un palpeur de déplacement analogique, par exemple un potentiomètre linéaire, pour la régulation du positionnement et de la vitesse des servomoteurs électriques refroidis par liquide (28,32a,32b;22a,22b) est associé aux dispositifs d'entraînement (6;7a;7b;9a,9b) des divers groupes de construction (A,B,C et D).
